Europäisches Patentamt

European Patent Office

Office européen des brevets

(11) Veröffentlichungsnummer: **0 004 679**
**B1**

(12) **EUROPÄISCHE PATENTSCHRIFT**

(45) Veröffentlichungstag der Patentschrift:
**20.01.82**

(21) Anmeldenummer: **79101098.6**

(22) Anmeldetag: **10.04.79**

(51) Int. Cl.³: **B 60 B 3/02**, B 21 D 53/26

(54) Verfahren zur Herstellung eines Rades aus Leichtmetall für luftbereifte Kraftfahrzeuge.

(30) Priorität: **10.04.78 NO 781248**

(43) Veröffentlichungstag der Anmeldung:
**17.10.79 Patentblatt 79/21**

(45) Bekanntmachung des Hinweises auf die Patenterteilung:
**20.01.82 Patentblatt 82/3**

(84) Benannte Vertragsstaaten:
**CH DE FR GB NL SE**

(56) Entgegenhaltungen:
**BE-A-338 591**
**DE-C-132 546**
**DE-C-2 423 181**
**DE-U-7 416 695**
**FR-A-599 883**
**FR-A-618 609**
**FR-A-703 943**
**FR-A-1 002 005**
**FR-A-2 125 544**
**FR-A-2 248 946**
**US-A-1 518 369**
**US-A-1 525 479**
**US-A-3 719 980**
**US-A-3 842 475**

(73) Patentinhaber: **Ardal og Sunndal Verk a.s.,**
**Sörkedalsveien 6, Oslo 3 (NO)**

(72) Erfinder: **Trondsen, Kristian Frederik, Skolegt. 32,**
***3080 Holmestrand (NO)***
Erfinder: **Petersen, Vagn, Solasveien 28,**
***3080 Holmestrand (NO)***
Erfinder: **Berg, Otto, Undelstadveien 84c, 1380 Asker**
**(NO)**

(74) Vertreter: **Zellentin, Rüdiger, Dr. et al,**
**Zweibrückenstrasse 15, D-8000 München 2 (DE)**

Verfahren zur Herstellung eines Rades aus Leichtmetall für luftbereifte Kraftfahrzeuge

Die Erfindung betrifft ein Verfahren zur Herstellung eines Rades aus Leichtmetall für luftbereifte Kraftfahrzeuge, wobei zwei Bleche im mittleren Bereich unlösbar flächig miteinander verbunden und deren Ränder anschliessend gespreizt und geformt werden.

Ein derartiges Verfahren ist aus der US-PS 3 719 980 bekannt. Hierbei werden zwei kreisförmige, ausgestanzte Bleche gemeinsam stufenweise derart verformt, dass ein kreisförmiger S-förmig gestalteter Überlappungsbereich (Wulst) im Abstand vom Rand geschaffen wird, durch den die Bleche im mittleren Bereich unlösbar miteinander verbunden sind. Die Randpartien werden dann in weiteren Verfahrensschritten gespreizt und geformt. Insbesondere durch die mehrstufige Verformung ist das Verfahren sehr aufwendig. Durch die Bildung des s-förmigen Überlappungswulstes wird ausserdem viel teures Material benötigt.

Aus der FR-PS 2 125 544 ist es bekannt, zunächst zwei Profilteile eines Rades separat aus einem Leichtmetall aus Magnesium, Aluminium oder deren Legierungen herzustellen, die anschliessend miteinander mittels einer zwischen ihnen anzuordnenden Zwischenscheibe und Nabe fest verklebt werden. Dieses Verfahren erfordert die separate Herstellung der einzelnen Radteile und dann deren Montage unter Einschluss des Verbindens dieser Teile. Dies ist sehr arbeitsaufwendig und erfordert zudem Montage- und Lagerplätze.

Aufgabe der Erfindung ist es, ein Verfahren zur Herstellung eines Rades aus Leichtmetall anzugeben, das es gestattet, die Räder auf einfache materialsparende Weise unter Ausschluss von Montagearbeiten herzustellen, wobei die Räder trotzdem die erforderlichen Festigkeitseigenschaften aufweisen.

Diese Aufgabe wird durch ein Verfahren zur Herstellung eines Rades aus Leichtmetall für luftbereifte Kraftfahrzeuge, wobei zwei Blechabschnitte im mittleren Bereich unlösbar flächig miteinander verbunden und deren Ränder anschliessend gespreizt und geformt werden, dadurch gelöst, dass die beiden Blechabschnitte bestehend aus zwei Blechen oder einem gefalteten Blech durch Walzen unter Verminderung der Blechstärke miteinander verbunden werden, wobei vorher zwischen den Blechabschnitten in mindestens einer ringförmigen Zone ein Trennmittel angeordnet wird, und dass anschliessend die überschüssigen Randteile durch Stanzen abgetrennt werden.

Vorzugsweise wird ein Blech aus einer Al-Mg-Si-Legierung verwendet und das fertige Rad einem Lösungsglühen und einer Warmaushärtung unterzogen, wobei diese Wärmebehandlung mit einer thermischen Oberflächenbehandlung verbunden werden kann.

Die Erfindung besteht darin, dass man Bleche im mittleren und Nabenteil erst durch Walzen verbindet, und anschliessend den Rand spreizt und durch Drücken zum Rad formt. Zweckmässig besteht diese Technik aus den folgenden Verfahrensschritten:

1. Es werden zwei Bleche aus einer geeigneten Aluminiumlegierung zugeschnitten. Die Bleche werden gereinigt und auf die gereinigte Oberfläche des einen Bleches an vorgegebenen Stellen Trennmaterial aufgetragen.

2. Nun werden die beiden Bleche durch Walzen miteinander verbunden, wobei in den vom Trennmittel bedeckten Bereichen keine Verbindung der Bleche erfolgt.

3. Die durch Walzen verbundenen Bleche werden nun so rundgeschnitten, dass die kreisförmige Zone des aufgebrachten Trennmittels sich am Rand des Werkstücks befindet. Hier sind die beiden Zuschnitte nicht miteinander verbunden, können voneinander gespreizt und anschliessend durch Drücken zur Felge geformt werden.

4. Für den Drückvorgang wird das Werkstück in einer Drückbank eingespannt, wobei es in ein geeignetes Futter gepresst wird. Hierbei kann auch der Nabenteil in die gewünschte Form gedrückt werden oder er kann auf andere Weise, beispielsweise durch Tiefziehen, geformt werden.

5. Das Rad wird nun einer mechanischen Endbearbeitung zugeführt, wobei auch Löcher gestanzt werden und gegebenenfalls die Oberfläche bearbeitet wird.

6. Die Räder werden dann einer thermischen Behandlung unterzogen.

7. Endjustierung und Prüfung.

Die verwendeten Aluminiumlegierungen müssen hohe mechanische Festigkeit und gute Formungsfähigkeit aufweisen. Es gibt härtbare Legierungen mit Eigenschaftskombinationen, die eine ausserordentliche Plastizität im sogenannten Erweichungszustand aufweisen, durch Lösungsglühen oder volles Tempern einen festen Zustand erreichen, während die mechanischen Festigkeitseigenschaften durch nachfolgendes künstliches oder natürliches Altern, je nach Legierungsart, verbessert werden können. Solche Legierungen sind beispielsweise AlCu-, AlCuMg-, AlMgSi-, AlZnMg- und AlZnMgCu-Legierungen. Die AlMg-Si- und AlZnMg-Legierungen sind besonders geeignet, da sie auch einen guten Korrosionswiderstand aufweisen und ihre Oberfläche bearbeitet werden kann.

Einige der härtbaren Aluminiumlegierungen, insbesondere Legierungen des Typs AlMgSi haben Eigenschaften, die es erlauben, die Produktion als kontinuierlichen Vorgang auszulegen, soweit das möglich ist. Mit anderen Worten, die einzelnen Verfahrensschritte wie Walzen, Lösungsglühen Oberflächenbearbeitung können in der Reihenfolge vorgenommen werden, in welcher der Zustand des Materials hierfür geeignet ist. Ferner ist eine optimale Kombination der Produktionsparameter, der Endeigenschaften und des Materialbedarfs möglich, was von wesentlicher Bedeutung für die Wirtschaftlichkeit des Verfahrens ist.

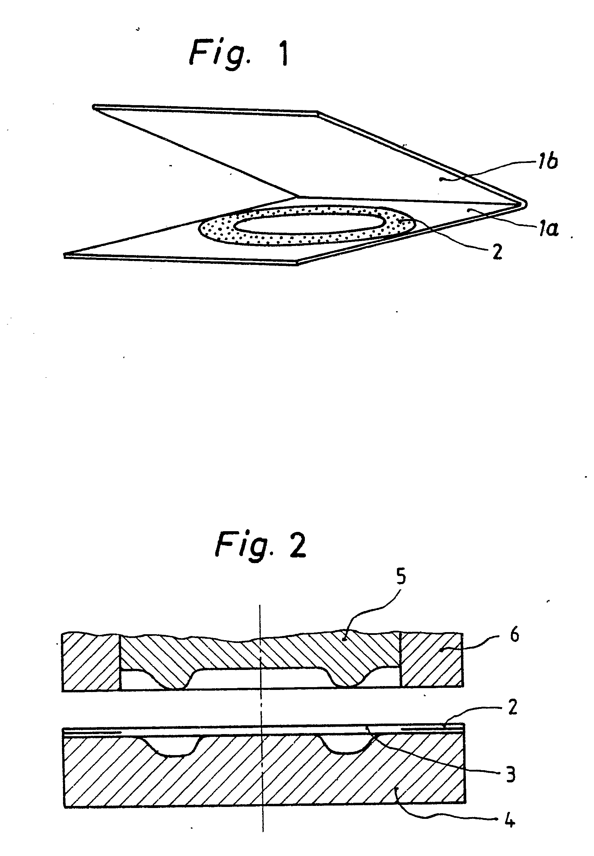

Die Erfindung wird anhand von Zeichnungen näher erläutert. Es zeigt:  Fig. 1 ein aus einem gefalteten Blech bestehendes Werkstück zur Herstellung eines Rohlings,

Fig. 2 die verbundenen Werkstückshälften gemäss Fig. 1 in einer Formpresse,

Fig. 3 das Werkstück nach Fig. 2 mit einem Spreizwerkzeug für den Rand,

Fig. 4 die Bildung des Rades aus dem Werkstück gemäss Fig. 3.

In Fig. 1 ist ein Blechzuschnitt zur Hälfte gefaltet, so dass zwei miteinander verbundene Blechscheiben 1a und 1b gebildet sind, wobei auf die Scheibe 1a ringförmig ein Trennmittel 2 aufgetragen ist, wonach die Blechscheiben 1a und 1b durch Walzen miteinander verbunden werden, worauf nach Abtrennen der überschüssigen Randteile der Radrohling 3 in eine Formpresse eingelegt wird, deren Matrize 4, Stempel 5 und Druckring 6 in Fig. 2 gezeigt sind.

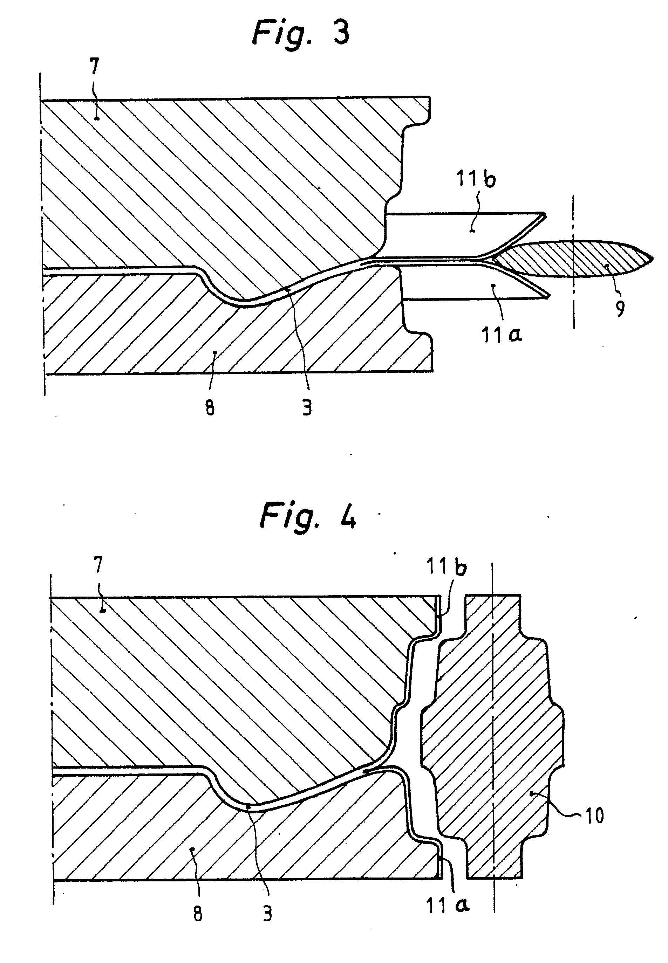

In Fig. 3 und 4 ist der Rohling 3 im aus Teilen 7 und 8 bestehenden Futter einer Drückbank eingespannt, wobei die über das Futter hinausragenden Felgenteile durch ein scheibenförmiges Werkzeug 9 gespreizt und anschliessend durch eine Walze 10, deren Profil dem Radprofil 11a, b entspricht, zum fertigen Rad geformt werden.

Hierbei wird die eine Seite von jeweils zwei Blechen entfettet, gebeizt, mit Drahtbürsten behandelt und von Staub und Feuchtigkeit befreit. Hierauf wird Trennmittel in bestimmter Konfiguration, beispielsweise als elliptisches Band, aufgetragen. Nun werden die beiden Bleche mit den behandelten Seiten zusammengelegt, so dass das Trennmittel sich zwischen den beiden Flächen befindet. Anstelle von zwei Blechen kann auch eines benutzt werden, das nach entsprechender Behandlung in analoger Weise zur Hälfte gefaltet wird. Das so vorbereitete Werkstück wird dann auf eine zur Erzielung einer Verbindung notwendige Warmwalztemperatur gebracht, die bei den hier in Frage kommenden Materialien über 350 °C liegt. Die Aufheizungszeit und der Zeitraum bis zum Walzbeginn sollte so kurz wie möglich gehalten werden oder es sollte ein inertes Ofenabgas eingesetzt werden, um ein zu starkes Oxidieren der zu verbindenden Oberflächen zu vermeiden. Es kann aber auch der Spalt zwischen den beiden Oberflächen von aussen verschlossen werden. Beim Walzen wird die Stärke des Werkstücks in einem Durchgang um 40 bis 70% reduziert, wonach notwendige Korrekturen durch weitere Durchgänge bis zum Erreichen der vorgegebenen Stärke möglich sind. Es ist auch möglich, durch das Warmwalzen eine geringere Reduzierung der Stärke vorzunehmen und eine weitere Reduzierung durch anschliessendes Kaltwalzen vorzunehmen. Die Ausgangs- und Endstärke des Bleches ist so gewählt, dass der elliptische Trennmittelbereich nach Beendigung des Walzens kreisförmig ist. Danach wird der Rohling ausgestanzt, dessen Durchmesser einen für die endgültige Formung des Rades ausreichenden Durchmesser haben soll. Der Rohling besteht somit aus einem zentralen, kreisförmigen Bereich, in dem die beiden Blechscheiben miteinander verbunden sind und einem ringförmigen Randbereich, in dem keine Bindung der Blechscheiben vorhanden ist.

Danach erhält die Nabe die erforderliche Form durch Drücken, Pressformen oder Tiefziehen. Anschliessend daran wird der Radrohling in ein geeignetes Futter eines Drückbank gespannt und in Rotation versetzt, wobei der Rand, in dem die beiden ursprünglichen Blechscheiben nicht verbunden sind, mit Hilfe eines formentsprechenden Werkzeugs gespreizt wird.

Es wurde ebenfalls bereits angedeutet, dass ein kontinuierliches Herstellungsverfahren nicht zuletzt aus ökonomischen Gründen ·anzustreben sei. Darunter ist zu verstehen, dass das Verbinden der Blechzuschnitte durch Walzen bei einer ausreichend hohen Temperatur vorgenommen werden soll, mit anschliessender geregelter Abkühlung, wobei das Material gleichzeitig einer Lösungsglühung unterzogen wird.

Bei der Herstellung von Rädern aus einer Legierung vom Typ AlMgSi ist besonders darauf zu achten, dass das Material beim Lösungsglühen einer natürlichen Alterung unterliegt. Um den auf das Lösungsglühen folgenden vorübergehenden plastischen Zustand in einem nachfolgenden Formungsprozess ohne vollständiges Tempern zu nutzen, ist es notwendig, die einzelnen Formungsschritte in einer angemessen kurzen Zeit durchzuführen. Die für den Formungsprozess erförderliche Plastizität, die bis zu einem gewissen Grade von der Zusammensetzung der Legierung abhängt, ist ausschlaggebend für den Zeitraum einer möglichen Zwischenlagerung. Für Legierungen vom Typ AlMySi ist eine möglichst kurze Zwischenlagerung einzuhalten. Bei Einhaltung bestimmter Zeitgrenzen für die einzelnen Formungsschritte ist es aber möglich, nach Abschluss der Formung das Material einer künstlichen Alterung zu unterziehen und so eine befriedigende mechanische Festigkeit zu erzielen.

Künstliches Altern erfordert eine Wärmebehandlung von nur wenigen Minuten, wenn ausreichend hohe Temperaturen angewendet werden. Es ist ferner möglich, diese Wärmebehandlung, falls erforderlich, mit einer Oberflächenbehandlung zu verbinden.

Wärmebehandlungen, wie insbesondere Lösungsglühen und künstliches Altern, sind für ein kontinuierliches Verfahren gut geeignet, vorausgesetzt, dass eine geeignete Legierung eingesetzt wird.

Beispiel

Ein 12,0 mm starkes Blech aus AlmgSi 1 wurde einseitig entfettet, gebeizt, mit einer Drahtbürste behandelt und Staub und Feuchtigkeit von der Oberfläche entfernt. In Form eines elliptischen Ringes wurde Graphit als Trennmittel aufgetragen und das Blech gefaltet. Das Werkstück wurde im Laufe von 3 Minuten auf eine Temperatur von 475 °C gebracht. Anschliessend wurde es in einem einzigen Durchgang gewalzt, wonach es eine restliche Stärke von 8,4 mm hatte. In einem zweiten Durchgang wurde die Werkstücksdichte auf 7.0 mm korrigiert.

Aus diesem Werkstück wurde anschliessend ein kreisrunder Rohling gestanzt, der in einer Presse auf die in Fig. 2 gezeigte Form gebracht wurde. Anschliessend wurde in einer Drückbank der Rand gespreizt und zur Felge geformt. Schliesslich wurden Durchbrüche für Achse, Bolzen, Schlauchventil und dergleichen gestanzt und das Werkstück einer Wärmebehandlung von 10 Minuten bei 550°C unterzogen und dann bei 215°C 15 Minuten lang künstlich gealtert.

**Patentansprüche**

1. Verfahren zur Herstellung eines Rades aus Leichtmetall für luftbereifte Kraftfahrzeuge, wobei zwei Blechabschnitte im mittleren Bereich unlösbar flächig miteinander verbunden und deren Ränder anschliessend gespreizt und geformt werden, dadurch gekennzeichnet, dass die beiden Blechabschnitte bestehend aus zwei Blechen oder einem gefalteten Blech durch Walzen unter Verminderung der Blechstärke miteinander verbunden werden, wobei vorher zwischen den Blechabschnitten in mindestens einer ringförmigen Zone ein Trennmittel angeordnet wird, und dass anschliessend die überschüssigen Randteile durch Stanzen abgetrennt werden.

2. Verfahren nach Anspruch 1, dadurch gekennzeichnet, dass Blech aus einer Al-Mg-Si-Legierung verwendet und das fertige Rad einem Lösungsglühen und einer Warmaushärtung unterzogen wird.

3. Verfahren nach Anspruch 2, dadurch gekennzeichnet, dass die Wärmebehandlung mit einer thermischen Oberflächenbehandlung verbunden wird.

**Claims**

1. A method of producing a light metal wheel for pneumatictired vehicles, which method involves inseparably bonding together two pieces of sheet metal in one or more surfaces in their central regions, the edges being subsequently split and shaped, characterized in that the pieces of sheet, which may consist either of two separate pieces or of a single piece folded double, are bonded by rolling which, at the same time, reduces the thickness of the workpiece, and in that, prior to rolling, a bond-inhibiting agent is applied between the plates in at least one ring-shaped zone, and that the excess edge material is removed in a known manner.

2. Method according to claim 1, characterized in that the sheet is made of an Al-Mg-Si alloy, and in that the finished wheel is subjected to solution heat-treatment and artificial aging.

3. Method according to claim 2, characterized in that the heat treatment is combined with a thermal surface treatment.

**Revendications**

1. Procédé de fabrication d'une roue en métal léger pour véhicule automobile équipé de bandages pneumatiques, deux morceaux de tôles étant reliées surfaciquement l'une à l'autre de manière inséparable dans la zone centrale et leurs bords étant ensuite séparés et conformés, caractérisé en ce que les deux morceaux de tôle, consistant en deux tôles ou en une tôle pliée, sont solidarisés l'une avec l'autre par laminage avec diminution de l'épaisseur de tôle, un moyen séparateur étant disposé préalablement entre les morceaux de tôle au moins sur une zone annulaire, et en ce que, ensuite, les parties périphériques superflues sont éliminées d'une manière connue.

2. Procédé selon la revendication 1, caractérisé en ce qu'on utilise de la tôle en un alliage Al-Mg-Si et en ce que la roue terminée est soumise à un recuit de mise en solution et à un vieillissement thermique.

3. Procédé selon la revendication 2, caractérisé en ce que le traitement thermique est associé à un traitement thermique de surface.

## Fig. 1

## Fig. 2

# Fig. 3

# Fig. 4